# EUROPÄISCHE PATENTSCHRIFT

(11) **EP 3 264 250 B1**
(45) Veröffentlichungstag und Bekanntmachung des Hinweises auf die Patenterteilung: **09.12.2020**
(21) Anmeldenummer: 16176409.7
(22) Anmeldetag: 27.06.2016
(51) Int. Cl.: G06F 3/0488, G06F 3/0482, G06F 3/0481, B60K 37/06

(54) **VERFAHREN UND SYSTEM ZUM AUSWÄHLEN EINES BETRIEBSMODUS FÜR EIN FAHRZEUG**
METHOD AND SYSTEM FOR SELECTING A MODE OF OPERATION FOR A VEHICLE
PROCEDE ET SYSTEME DE SELECTION D'UN MODE DE FONCTIONNEMENT POUR UN VEHICULE AUTOMOBILE

(43) Veröffentlichungstag der Anmeldung: 03.01.2018
(73) Patentinhaber: Volkswagen Aktiengesellschaft, 38440 Wolfsburg (DE)
(72) Erfinder: CENGIL, Sükrü, 30938 Burgwedel (DE); Herdey, Jan Peter, 38110 Braunschweig (DE); WOLF, Oliver, 38442 Braunschweig (DE)
(74) Vertreter: Reitstötter Kinzebach

(56) Entgegenhaltungen:
- DE-A1-102014 019 157
- DE-A1-102014 201 075
- Anonymous: "Drive Mode Supplement", , 1. Juli 2015 (2015-07-01), Seiten 1-91, XP055331549, Gefunden im Internet: URL:http://www.dodge.com/download/pdf/ds/2 015-Challenger_Charger_Drive_Modes-SU-1st. pdf [gefunden am 2016-12-23]
- Mini Uk: "MINI DRIVING MODES", , 24. Februar 2016 (2016-02-24), XP055331560, Gefunden im Internet: URL:https://www.youtube.com/watch?v=qhI4fM Et7-Y [gefunden am 2016-12-23]
- Lexus Drivers: "RC F Drive Mode Select", , 1. April 2015 (2015-04-01), XP055331562, Gefunden im Internet: URL:https://www.youtube.com/watch?v=MggcQ1 lxXtU [gefunden am 2016-12-23]
- Infiniti Usa: "2016 Infiniti Q50 - Infiniti Drive Mode Selector", , 16. Februar 2016 (2016-02-16), XP055331563, Gefunden im Internet: URL:https://www.youtube.com/watch?v=FRuBP7 9BzM8 [gefunden am 2016-12-23]

## Beschreibung

Die vorliegende Erfindung betrifft ein Verfahren zum Auswählen eines Betriebsmodus für ein Fahrzeug, welches zumindest zwei Betriebsmodi aufweist. Bei dem Verfahren werden Grafikdaten einer grafischen Bedienoberfläche erzeugt und ausgegeben, wobei die grafische Bedienoberfläche eine Hintergrunddarstellung und zumindest zwei auswählbare Schaltflächen umfasst, wobei die Schaltflächen jeweils einem Betriebsmodus des Fahrzeugs zugeordnet sind. Es wird eine Auswahl einer Schaltfläche erfasst und in Abhängigkeit von dem Betriebsmodus, welcher der ausgewählten Schaltfläche zugeordnet ist, wird ein Steuersignal erzeugt und an eine Steuerungseinrichtung des Fahrzeugs übertragen.

Die Erfindung betrifft ferner ein System zum Auswählen eines Betriebsmodus für ein Fahrzeug, welches zumindest zwei Betriebsmodi aufweist. Das System umfasst eine Recheneinheit, durch die Grafikdaten einer grafischen Bedienoberfläche erzeugbar sind, und eine Ausgabeeinheit, durch welche die Grafikdaten ausgebbar sind. Dabei umfasst die grafische Bedienoberfläche eine Hintergrunddarstellung und zumindest zwei auswählbare Schaltflächen, wobei die Schaltflächen jeweils einem Betriebsmodus des Fahrzeugs zugeordnet sind. Das System umfasst ferner eine Erfassungseinheit, durch die eine Auswahl einer Schaltfläche erfassbar ist. Dabei ist in Abhängigkeit von dem Betriebsmodus, welcher der ausgewählten Schaltfläche zugeordnet ist, ein Steuersignal erzeugbar und an eine Steuerungseinrichtung des Fahrzeugs übertragbar.

Moderne Fahrzeuge verfügen typischerweise über eine Vielzahl von Steuerungssystemen, durch die verschiedene Parameter des Fahrzeugbetriebs geregelt werden und die oft weitreichenden Einfluss auf das Fahrerlebnis für den Fahrer und die Passagiere des Fahrzeugs haben. Insbesondere können Einstellungen des Fahrwerks für die Fahrt von zentraler Bedeutung sein und neben ihrer Bedeutung für die Sicherheit auch den Fahrkomfort beeinflussen.

Aus diesem Grund können relevante Einstellungen in zunehmendem Maße auch durch den Benutzer vorgenommen und angepasst werden. Die Bedienung der für die Einstellung verwendeten Systeme stellt jedoch vor allem unerfahrene Benutzer häufig vor die Schwierigkeit, die richtigen Einstellungen für das von ihnen gewünschte Fahrverhalten des Fahrzeugs zu erkennen. Um diese Aspekte zu verbessern, wurden verschiedene Ansätze vorgeschlagen:
Bei dem in der DE 100 33 770 A1 beschriebenen System zur manuellen Einstellung der Dämpfung eines Kraftfahrzeug-Fahrwerks werden eine schematische Darstellung eines Fahrzeugquerschnitts und Symbole verwendet, um die Dämpfung anhand der aktiven Einstellungen auszugeben.

Das in der DE 10 2006 022 692 B4 vorgeschlagene Verfahren zur Aktivierung und Deaktivierung von Funktionen eines Fahrzeugs sieht vor, dass in einem Offroad-Betrieb des Fahrzeugs eine Symboldarstellung aufleuchten kann, welche die Offroad-Funktion darstellt.

Die in der EP 2 945 046 A1 beschriebene Anwenderschnittstelle erlaubt das Einstellen eines Dämpfers eines Fahrzeugs. Dazu werden Schaltflächen angezeigt, durch deren Betätigung ein Menü aufgerufen kann, anhand dessen Detaileinstellungen vorgenommen werden können.

Die WO 2013/087777 A1 beschreibt ein Verfahren zum Einstellen von Fahrzeugfunktionen, bei dem durch ein Betätigen von Schaltflächen Fahrfunktionen eingestellt werden können.

In der Veröffentlichung "Drive Mode Supplement", (20150701), Seiten 1 - 91 (URL: http://www.dodge.com/download/pdf/ds/2015-Challenger_Charger_Drive_Modes-SU-1st.pdf) wird eine Bedienoberfläche beschrieben, die Schaltflächen umfasst, mittels derer zwischen verschiedenen Betriebsmodi umgeschaltet werden kann. In Abhängigkeit von dem eingestellten Betriebsmodus werden verschiedene Komponenten eines Antriebsstrangs und Fahrwerks in einem Fahrzeug in einer Darstellung in unterschiedlichen Farben dargestellt.

In der DE 10 2014 201 075 A1 wird schließlich eine Vorrichtung beschrieben, bei der ein Antriebsmodus ausgewählt werden kann. Mittels einer Modusanzeigekomponente wird der Modus angezeigt und es kann ferner eine Modusempfehlung erzeugt und ausgegeben werden. Insbesondere wird bei Regen oder Schnee empfohlen, den Modus zu wechseln.

Dennoch zeigt sich bei den bekannten Systemen, dass für ihre Bedienung noch immer viel Erfahrung und technisches Wissen des Nutzers erforderlich ist. Es ist daher die Aufgabe der vorliegenden Erfindung, ein Verfahren und ein System zum Auswählen eines Betriebsmodus bereitzustellen, die dem Nutzer eine besonders einfache und intuitiv verständliche Bedienung ermöglichen.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren der eingangs genannten Art umfasst die Hintergrunddarstellung eine Darstellung einer Fahrzeugoberfläche, wobei die dargestellte Fahrzeugoberfläche in Abhängigkeit von dem zum aktuellen Zeitpunkt ausgewählten Betriebsmodus gebildet wird.

Dadurch wird vorteilhafterweise erreicht, dass ein Nutzer sehr schnell und intuitiv erfassen kann, welcher Betriebsmodus ausgewählt ist, und es kann sehr einfach ausgegeben werden, welche Konsequenzen die vorgenommenen Einstellungen für das Fahrverhalten des Fahrzeugs haben. Ferner kann das Potential hochwertiger Anzeigevorrichtungen ausgeschöpft werden und es kann ein emotionaler Impuls genutzt werden, um dem Nutzer die Bedienung ohne langes Nachdenken zu ermöglichen sowie eine Rückmeldung über die getroffene Auswahl zu geben.

Insbesondere können die Betriebsmodi verschiedene Fahrprofile repräsentieren. Beispielsweise kann ein besonders ökonomisch und/oder ökologisch optimiertes Fahrprofil vorgesehen sein. Ferner können Fahrprofile für eine besonders sportliche oder komfortable Fahrweise optimiert sein oder es können bestimmte Verkehrsbedingungen berücksichtigt werden, wie etwa besondere klimatische Bedingungen wie Schneefall, Nässe oder spezifische Fahrbahnverhältnisse, wie bei einer Offroad-Fahrt.

Zur Verbesserung der Auswahl wird insbesondere die Hintergrunddarstellung der Bedienoberfläche auf besondere Weise gebildet, durch die insbesondere eine besonders starke und intuitiv erfassbare Verbindung zwischen der grafischen Bedienoberfläche und dem Fahrzeug hergestellt werden kann. Diese Wirkung des erfindungsgemäßen Verfahrens wird auch dadurch unterstützt, dass die Hintergrunddarstellung eine Fahrzeugoberfläche umfasst und damit direkt auf den Zusammenhang mit dem Fahrzeug verweist. Dabei wird insbesondere unterschieden zwischen einer Karosserieform, die eine geometrische Beschreibung des Verlaufs der äußeren Fahrzeugoberfläche repräsentiert, und der Ausbildung der Oberfläche selbst, die beispielsweise eine farbliche Gestaltung und/oder optische Effekte umfasst. Insbesondere ist die von der Hintergrunddarstellung umfasste Fahrzeugoberfläche eine vereinfacht dargestellte oder abstrahierte Darstellung der tatsächlichen äußeren Oberfläche des Fahrzeugs, wobei die Ähnlichkeit der Darstellung zur realen Erscheinung je nach Abstraktionsgrad verschieden stark ausgeprägt sein kann.

Unter Schaltflächen werden im Sinne der Erfindung Steuerelemente einer grafischen Benutzerschnittstelle verstanden. Schaltflächen unterscheiden sich von Elementen und Flächen zur reinen Informationsanzeige, sogenannten Anzeigeelementen beziehungsweise Anzeigenflächen, darin, dass sie auswählbar sind und/oder betätigt werden können. Bei einer Auswahl einer Schaltfläche wird eine zugeordnete Funktion ausgeführt. Die Funktion kann etwa zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Sie können beliebig für eine frei programmierbare Anzeigefläche erzeugt und von dieser angezeigt werden, in anderen Szenarien können sie an festen Positionen angeordnet sein, etwa wenn sie physischen Schaltelementen an diesen festen Positionen zugeordnet sind.

Typischerweise nehmen die Schaltflächen dabei einen Teil der zur Verfügung stehenden Fläche ein, während in ihrer Umgebung und/oder zwischen ihnen Flächen für die Hintergrunddarstellung zur Verfügung stehen. Die Hintergrunddarstellung wird dabei im Bereich der Schaltflächen von diesen verdeckt, wobei insbesondere der Eindruck einer räumlichen Staffelung entsteht.

Die Ausgabe der grafischen Bedienoberfläche kann etwa mittels eines fest im Fahrzeug angeordneten Displays erfolgen. Beispielsweise kann dazu ein Mitteldisplay verwendet werden, wie es in vielen Fahrzeugen üblicherweise vorgesehen ist. Die Erfassung der Auswahl kann ebenfalls mittels dieses Displays erfolgen, etwa mittels eines Touchscreens. Allerdings können auch andere Ausgabevorrichtungen verwendet werden, etwa ein anderes Display des Fahrzeugs oder eine Anzeige eines mobilen Nutzergeräts, das in einer zumindest zeitweisen datentechnischen Verbindung zu dem Fahrzeug steht.

Die Erfassung von Nutzereingaben, insbesondere also einer Auswahl oder Betätigung einer Schaltfläche, kann ebenfalls auf verschiedene Weisen erfolgen, wobei alternativ oder zusätzlich zu einem Touchscreen zum Beispiel ein Dreh-Drück-Steller, ein Touchpad, eine Tastatur oder ein Tastschalter verwendet werden kann. Beispielsweise kann eine Auswahl erfolgen durch Berühren eines Touchscreens an einer Position, die einer bestimmten Schaltfläche zugeordnet ist. Ferner kann die Auswahl ein Verschieben eines Zeigers (*Cursor*) an eine bestimmte Position innerhalb der grafischen Bedienoberfläche umfassen oder ein Verändern einer Auswahl der Schaltflächen, wobei die Auswahl von einer zur nächsten Schaltfläche springt. Die Auswahl kann etwa mittels eines Knopf- oder Tastendrucks bestätigt werden.

Das Verfahren erlaubt es, die Darstellung der Schaltflächen und die Hintergrunddarstellung auf unterschiedliche Weisen zu bilden. Beispielsweise können die Schaltflächen Symbole, grafische Darstellungen oder Beschriftungen aufweisen, wobei diese separat von der Hintergrunddarstellung, insbesondere unabhängig von dem ausgewählten Betriebsmodus, gebildet werden können. Ferner können die dynamischen oder statischen Darstellungsformen für die Schaltflächen und die Hintergrunddarstellung unterschiedlich gewählt werden.

Insbesondere kann anhand des bei dem Verfahren erzeugten Steuersignals der ausgewählte Betriebsmodus aktiviert werden, wobei gegebenenfalls ein Bestätigungsschritt vorgesehen sein kann, um den ausgewählten Betriebsmodus zu übernehmen. Beim Aktivieren eines Betriebsmodus werden beispielsweise vordefinierte Einstellungen bestimmter Einrichtungen des Fahrzeugs vorgenommen.

Bei dem erfindungsgemäßen Verfahren weist die Darstellung der Fahrzeugoberfläche eine Karosserieform und eine Darstellung einer virtuellen Umgebung auf, wobei die Darstellung der virtuellen Umgebung in Abhängigkeit von dem zum aktuellen Zeitpunkt ausgewählten Betriebsmodus gebildet wird und die Karosserieform überlagernd dargestellt wird. Dadurch wird vorteilhafterweise eine besonders direkte Verbindung zwischen der Bedienoberfläche und dem Fahrzeug erreicht.

Die Karosserieform ist dabei eine Darstellung des geometrischen Verlaufs der äußeren Fahrzeugoberfläche, gegebenenfalls mit einem bestimmten Grad der Abstraktion. Beispielsweise kann der Verlauf der Oberfläche in einem seitlichen Bereich des Fahrzeugs dargestellt werden, wobei ferner die Wahl des Betrachtungswinkels und des dargestellten Ausschnitts so erfolgt, dass eine besonders klar erkennbare Fahrzeugform erzeugt wird.

Die Darstellung der virtuellen Umgebung kann dabei insbesondere so erfolgen, dass sie auf der dargestellten Fahrzeugoberfläche erscheint, etwa nach Art einer Reflexion. Als "virtuelle Umgebung" wird dabei eine nicht notwendigerweise realistische Darstellung einer Umgebung des Fahrzeugs verstanden. Auf diese Weise kann dargestellt werden, dass für den ausgewählten Betriebsmodus von einer Fahrsituation ausgegangen wird, in der sich das Fahrzeug in einer Umgebung nach Art der dargestellten befindet, und dass die Einstellungen so gewählt werden, dass das Fahrverhalten an die besonderen Bedürfnisse der jeweiligen Fahrsituation angepasst sind.

Durch die überlagernde Darstellung der virtuellen Umgebung kann die enge Beziehung des Fahrzeugs, das durch die Fahrzeugoberfläche repräsentiert wird, zu seiner Umgebung verdeutlicht werden, sodass der Nutzer intuitiv den engen Zusammenhang zwischen der Umgebung und dem Fahrverhalten des Fahrzeugs erkennt und optimale Einstellungen wählt.

Gemäß einer Ausbildung wird die Karosserieform der Hintergrunddarstellung für alle Betriebsmodi gleich gebildet. Indem dieses Element unter den verschiedenen Bedingungen gleichbleibend dargestellt wird, kann der Nutzer der Bedienoberfläche besonders leicht erkennen, dass mittels seiner Einstellungen eine Anpassung der Eigenschaften des jeweils gleichen Fahrzeugs für die wechselnden Eigenschaften seiner Umgebung erreicht wird. Insbesondere ist die Darstellung der Karosserieform dabei von dem ausgewählten Betriebsmodus unabhängig.

Gemäß einer weiteren Ausbildung wird die Karosserieform dreidimensional dargestellt. Dadurch kann vorteilhafterweise die Präsenz des Fahrzeugs in einer bestimmten Umgebung besonders stark verdeutlicht werden.

Erfindungsgemäß umfasst die virtuelle Umgebung eine Fahrbahn, Elemente einer Verkehrsinfrastruktur und/oder landschaftliche Objekte. Damit können vorteilhafterweise besonders relevante Elemente und Eigenschaften der Umgebung des Fahrzeugs durch die virtuelle Umgebung repräsentiert werden.

Beispielsweise kann eine Straße dargestellt werden, deren Verlauf beispielsweise besonders kurvenreich oder gerade sein kann oder die eine Verkehrsinfrastruktur, wie etwa bestimmte Fahrbahnmarkierungen oder Schilder aufweist. Auf diese Weise kann eine typische und leicht wiedererkennbare Fahrsituation repräsentiert werden, etwa auf einer Autobahn, einer Landstraße, einer Rennstrecke oder abseits befestigter Straßen. Landschaftliche Objekte können dabei insbesondere topografische Informationen repräsentieren, etwa geografische Besonderheiten, wie etwa Berge, oder weitere Eigenschaften einer Umgebung, wie etwa Bäume.

Erfindungsgemäß werden Umgebungsdaten erfasst und die Hintergrunddarstellung wird ferner in Abhängigkeit von den Umgebungsdaten gebildet. So kann vorteilhafterweise ein Bezug zwischen der virtuellen und der tatsächlichen Umgebung des Fahrzeugs hergestellt werden.

Beispielsweise kann die Erfassung von Umgebungsdaten mittels einer Kamera oder anderer bildgebender Verfahren erfolgen. Ferner können weitere Daten erfasst werden, etwa durch einen Abgleich der Position des Fahrzeugs mit einer Datenbank, wobei Daten über Straßen und Verkehrsverhältnisse genutzt werden können, wie sie typischerweise bei Navigationssystemen zum Einsatz kommen. So kann beispielsweise ermittelt werden, auf welchem Straßentyp sich das Fahrzeug aktuell befindet und die Darstellung der virtuellen Umgebung kann entsprechend angepasst werden.

Zudem können Daten verwendet werden, wie sie auch für Fahrerassistenzsysteme erfasst werden. Beispielsweise können Daten über Verkehrsverhältnisse in der tatsächlichen Umgebung des Fahrzeugs umfasst sein und die Darstellung der virtuellen Umgebung kann so erfolgen, dass zum Beispiel der umgebende Verkehr repräsentiert wird.

Beispielsweise können Elemente des umgebenden Verkehrs und/oder in der Umgebung des Fahrzeugs erfasste Elemente der Verkehrsinfrastruktur, wie beispielsweise Verkehrszeichen und Fahrbahnmarkierungen, der Fahrbahnverlauf oder landschaftliche Elemente, in die Gestaltung der Hintergrunddarstellung, insbesondere der virtuellen Umgebung, aufgenommen werden. Erfindungsgemäß wird die virtuelle Umgebung als eine zu einem bestimmten Grad abstrahierte Darstellung der tatsächlichen Umgebung des Fahrzeugs gebildet.

Gemäß einer weiteren Ausbildung umfassen die erfassten Umgebungsdaten Wetterdaten. Somit kann vorteilhafterweise ein besonders wichtiger Parameter der Verkehrsbedingungen bei der Darstellung der virtuellen Umgebung berücksichtigt werden. Beispielsweise kann Nässe oder Schnee auf einer Fahrbahn oder in der tatsächlichen Fahrzeugumgebung anhand der virtuellen Umgebung verdeutlicht werden.

Gemäß einer Weiterbildung wird anhand der erfassten Umgebungsdaten eine Betriebsmodusempfehlung erzeugt, wobei der Betriebsmodusempfehlung ein Betriebsmodus des Fahrzeugs zugeordnet ist. Dadurch kann der Nutzer vorteilhafterweise bei der Auswahl des für eine Fahrsituation passenden Betriebsmodus unterstützt werden. Die Betriebsmodusempfehlung kann auf verschiedene Weisen ausgegeben werden, etwa mittels einer Markierung der Schaltfläche, die dem empfohlenen Betriebsmodus zugeordnet ist, oder mittels eines Schriftzugs.

Insbesondere kann vorgesehen sein, dass anhand der Betriebsmodusempfehlung eine automatische Auswahl eines Betriebsmodus getroffen wird. Beispielsweise kann beim Aufruf eines entsprechenden Menüs bereits eine automatische Vorauswahl getroffen werden.

Gemäß einer Ausbildung wird die Hintergrunddarstellung in Abhängigkeit von der Betriebsmodusempfehlung gebildet. So kann die Betriebsmodusempfehlung vorteilhafterweise so angezeigt werden, dass der empfohlene Betriebsmodus für den Nutzer besonders schnell und leicht erfassbar ist. Insbesondere wird der empfohlene Betriebsmodus bereits als ausgewählt angezeigt.

Gemäß einer weiteren Ausbildung umfasst die Hintergrunddarstellung ferner einen Schriftzug. Dadurch kann vorteilhafterweise eine explizite Benennung des aktiven Betriebsmodus dargestellt werden. Beispielsweise kann der Schriftzug so dargestellt werden, dass er auf einer dargestellten Fläche, etwa einer Fahrbahnoberfläche der virtuellen Umgebung, erscheint.

Gemäß einer Weiterbildung umfasst die Hintergrunddarstellung ferner weitere Grafikelemente, wobei die weiteren Grafikelemente in Abhängigkeit von dem zum aktuellen Zeitpunkt ausgewählten Betriebsmodus gebildet werden. Dies bedeutet vorteilhafterweise eine Erweiterung der Mittel, mittels derer die virtuelle Umgebung ausgegeben werden kann.

Insbesondere können die Grafikelemente virtuelle Objekte repräsentieren, die in einem Zusammenhang zu der Darstellung der virtuellen Umgebung stehen. Beispielsweise können, wenn die virtuelle Umgebung bestimmte klimatische Bedingungen aufweist, weitere Hinweise darauf mittels der weiteren Grafikelemente ausgegeben werden, beispielsweise mittels Regentropfen, mittels fliegendem oder an der Karosserie angelagertem Schnee, mittels umherfliegender Blätter oder mittels aufspritzenden Bodengrunds.

Gemäß einer Ausbildung wird die Hintergrunddarstellung dynamisch erzeugt. Dadurch wird vorteilhafterweise eine besonders lebhafte Darstellung erzeugt, die dem Nutzer erlaubt, die Bedienoberfläche intensiv mit der angezeigten Fahrsituation und der Fahrt zu assoziieren. Beispielsweise kann die dynamische Erzeugung der Hintergrunddarstellung so erfolgen, dass eine Bewegung des Fahrzeugs durch die virtuelle Umgebung verdeutlicht wird. Ferner können etwa die weiteren Grafikelemente bewegt dargestellt werden und es können mit Bewegung verbundene Phänomene der virtuellen Umgebung dargestellt werden.

Gemäß einer Weiterbildung wird die zum aktuellen Zeitpunkt ausgewählte Schaltfläche der grafischen Bedienoberfläche hervorgehoben. Dies erlaubt, den ausgewählten Bedienmodus in vorteilhafter Weise besonders deutlich erfassbar zu machen.

Die Hervorhebung kann dabei auf an sich bekannte Weise erfolgen, etwa mittels einer Größenänderung, eines Schattens oder eines weiteren zwei- oder dreidimensionalen Effektes, mittels einer farblich veränderten Darstellung, durch eine Änderung der Helligkeit und/oder durch andere Hervorhebungseffekte, die insbesondere eine Unterscheidung von den anderen Schaltflächen erlauben, welche nicht ausgewählten Betriebsmodi zugeordnet sind. Ferner kann eine gestalterische Veränderung der Schaltfläche zur Hervorhebung verwendet werden.

Gemäß einer weiteren Ausgestaltung werden anhand des an die Steuereinheit des Fahrzeugs übertragenen Steuersignals eine Einstellungen eines Fahrwerks, einer Höchstgeschwindigkeit, einer Fahrzeuglenkung und/oder einer Getriebesteuerung vorgenommen. Dadurch können vorteilhafterweise Parameter, die für die Steuerung der Fahrweise des Fahrzeugs von Bedeutung sind, besonders einfach eingestellt werden. Insbesondere sind Fahrprofile vorgegeben, die einen Satz von Einstellungen umfassen, um so einem Nutzer seine Einstellung mit geringem Aufwand zu ermöglichen.

Das erfindungsgemäße System der eingangs genannten Art ist dadurch gekennzeichnet, dass die Hintergrunddarstellung eine Darstellung einer Fahrzeugoberfläche umfasst, wobei die Recheneinheit dazu eingerichtet ist, die dargestellte Fahrzeugoberfläche in Abhängigkeit von dem zum aktuellen Zeitpunkt ausgewählten Betriebsmodus zu bilden; sowie Umgebungsdaten erfassbar sind und die Recheneinheit dazu eingerichtet ist, die Hintergrunddarstellung ferner in Abhängigkeit von den Umgebungsdaten zu bilden; wobei die Darstellung der Fahrzeugoberfläche eine Karosserieform und eine Darstellung einer virtuellen Umgebung aufweist; wobei die Recheneinheit dazu eingerichtet ist, die Darstellung der virtuellen Umgebung in Abhängigkeit von dem zum aktuellen Zeitpunkt ausgewählten Betriebsmodus zu bilden und die Karosserieform überlagernd darzustellen; wobei die virtuelle Umgebung eine Fahrbahn, Elemente einer Verkehrsinfrastruktur und/oder landschaftliche Objekte umfasst; wobei die Recheneinheit dazu eingerichtet ist, die virtuelle Umgebung als eine abstrahierte Darstellung einer tatsächlichen Umgebung des Fahrzeugs zu bilden.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Die Erfindung wird nun anhand von Ausführungsbeispielen mit Bezug zu den Zeichnungen erläutert.
- Figur 1: zeigt ein Ausführungsbeispiel des erfindungsgemäßen Systems,
- Figur 2: zeigt ein Ausführungsbeispiel einer mittels des erfindungsgemäßen Verfahrens erzeugten Bedienoberfläche,
- Figuren 3A bis 3G: zeigen weitere Ausführungsbeispiele von mittels des erfindungsgemäßen Verfahrens erzeugten Bedienoberflächen und
- Figuren 4A und 4 B: zeigen Ausführungsbeispiele von mittels des erfindungsgemäßen Verfahrens erzeugten Bedienoberflächen mit Schriftzügen.

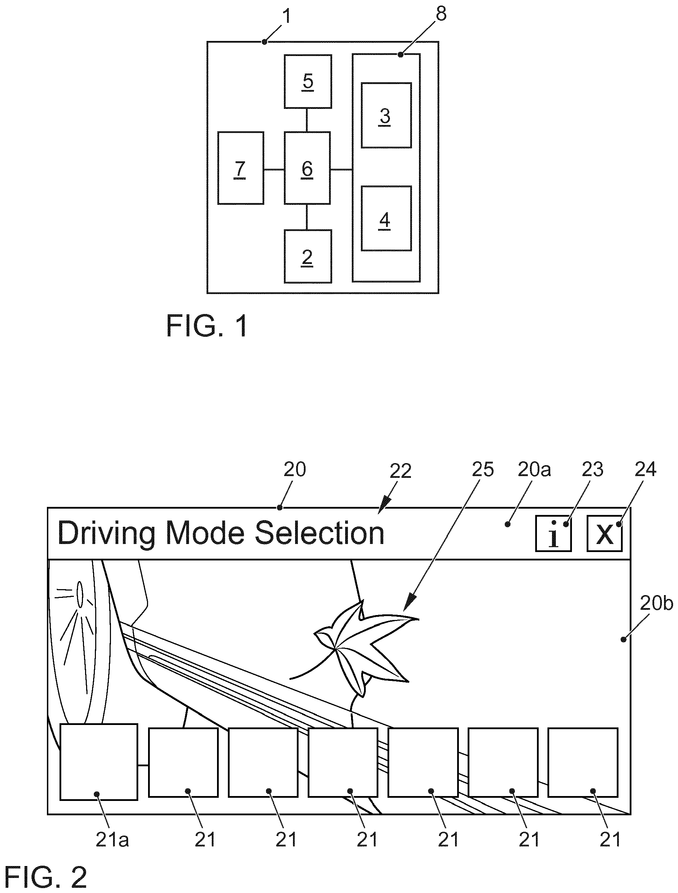

Mit Bezug zu Figur 1 wird ein Ausführungsbeispiel des erfindungsgemäßen Systems erläutert.

Ein Fahrzeug 1 umfasst eine Steuereinheit 6, mit der eine Recheneinheit 2, eine Umgebungsdatenerfassungseinheit 7, eine Steuerungseinrichtung 5 und ein Touchscreen 8 gekoppelt sind. Der Touchscreen 8 umfasst einen Ausgabeeinheit 3, im dargestellten Ausführungsbeispiel ein Display 3, sowie eine Erfassungseinheit 4, im dargestellten Fall eine berührungsempfindliche Oberfläche 4.

Dabei kann beispielsweise eine Folie über einer Anzeigefläche des Displays 3 angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf dem Display 3 angezeigten grafischen Objekt zugeordnet werden. Des Weiteren kann die Dauer der Berührung bei einer bestimmten Position oder innerhalb eines bestimmten Bereichs erfasst werden. Ferner können für die Bedienung Gesten definiert sein, beispielsweise eine Wischgeste, bei welcher sich die Position der Berührung der berührungsempfindlichen Oberfläche 4 von einer Startposition zu einer Endposition hin verändert und dabei einen bestimmten Weg beschreibt.

Mit Bezug zu den Figuren 1 und 2 wird ein Ausführungsbeispiel des erfindungsgemäßen Verfahrens erläutert. Dabei wird von dem oben mit Bezug zu Figur 1 erläuterten Ausführungsbeispiel des erfindungsgemäßen Systems ausgegangen.

Durch die Recheneinheit 2 werden Grafikdaten einer grafischen Bedienoberfläche 20 erzeugt. Die Grafikdaten werden an den Touchscreen 8 übertragen und mittels einer Anzeigefläche des Displays 3 angezeigt. Die in Figur 2 dargestellte grafische Bedienoberfläche 20 umfasst zwei Bereiche, nämlich eine Informationsleiste 20a, die sich am oberen Rand der grafischen Bedienoberfläche 20 über die gesamte Breite erstreckt und einen Informationstext 22 sowie Schaltflächen "Information" 23 und "Schließen" 24 umfasst.

Die verbleibende Fläche der grafischen Bedienoberfläche 20 nimmt eine Hintergrunddarstellung 20b ein. Im Vordergrund und die Hintergrunddarstellung 20b teilweise überdeckend sind Schaltflächen 21, 21a dargestellt. Den Schaltflächen 21, 21a ist jeweils ein Betriebsmodus des Fahrzeugs 1 zugeordnet und zur Identifikation der den Schaltflächen 21, 21a zugeordneten Betriebsmodi weisen die Schaltflächen 21, 21a Symbole und/oder Schriftzüge auf. Als "Betriebsmodus" wird dabei eine vorgegebene Kombination bestimmter Einstellungen des Fahrzeugs 1 bezeichnet, etwa für ein bestimmtes Fahrprofil. Insbesondere wird dabei das Fahrwerk des Fahrzeugs 1 eingestellt. Ferner können weitere Parameter eingestellt werden, die für die Steuerung des Fahrzeugs 1 sowie für das Fahrverhalten und das Fahrerlebnis relevant sind.

Durch die grafische Bedienoberfläche 20 kann ein Betriebsmodus des Fahrzeugs 1 ausgewählt werden, wobei der ausgewählte Betriebsmodus für das Fahrzeug 1 direkt übernommen wird. In weiteren Ausführungsbeispielen kann vorgesehen sein, dass der Betriebsmodus erst übernommen wird und die ihm zugeordneten Einstellungen erst an den entsprechenden Einrichtungen des Fahrzeugs 1 vorgenommen werden, nachdem in einem weiteren Schritt die Auswahl bestätigt wurde.

Bei dem dargestellten Ausführungsbeispiel wird eine Schaltfläche 21a als ausgewählt hervorgehoben, in diesem Beispiel dargestellt durch eine größere Fläche verglichen mit den nicht ausgewählten Schaltflächen 21. In weiteren Ausführungsbeispielen kann alternativ oder zusätzlich eine andere grafische Hervorhebung vorgesehen sein, beispielsweise mittels einer Veränderung der Farbe, Helligkeit, Form oder durch einen dynamischen grafischen Effekt.

Die Schaltflächen 21, 21a, 23, 24 der grafischen Bedienoberfläche 20 sind als Steuerelemente ausgebildet. Sie erlauben in Kombination mit der berührungsempfindlichen Oberfläche 4 des Touchscreens 8 eine Bedienung durch den Benutzer. Dies erfolgt in dem Ausführungsbeispiel durch Berühren der Schaltflächen, wobei die Position der Berührung durch die berührungsempfindliche Oberfläche 4 detektiert wird, die Position einer bestimmten Funktion zugeordnet wird und anhand der Funktion ein Steuerungssignal erzeugt wird. Beispielsweise kann in an sich bekannter Weise durch Berühren der Schaltfläche "Information" 23 ein Fenster mit einem Informationstext, beispielsweise mit weiterführenden Hinweisen zu den verfügbaren Funktionen, aufgerufen werden. Ferner kann durch Berühren der Schaltfläche "Schließen" 24 das gerade geöffnete Fenster, dessen Name durch den Informationstext 22 als "Driving Mode Selection" angegeben wird, geschlossen werden. Ferner kann durch Berühren einer der nicht ausgewählten Schaltflächen 21 der jeweils zugeordnete Betriebsmodus ausgewählt werden. Wird durch Berühren einer zuvor nicht ausgewählten Schaltfläche 21 ein neuer Betriebsmodus ausgewählt, so wird die entsprechende Schaltfläche nunmehr als ausgewählte Schaltfläche 21a dargestellt, während die zuvor ausgewählte Schaltfläche als nicht ausgewählte Schaltfläche 21 nicht mehr hervorgehoben dargestellt wird.

Die Hintergrunddarstellung 20b umfasst eine Darstellung eines Ausschnitts eines abstrahierten Fahrzeugs, wobei insbesondere eine Fahrzeugoberfläche dargestellt wird. Ferner können weitere Elemente des Fahrzeugs, insbesondere Räder, dargestellt sein. Die Hintergrunddarstellung 20b umfasst ferner ein grafisches Objekt 25, das in dem Ausführungsbeispiel zudem dynamisch dargestellt wird. Die Fahrzeugoberfläche weist eine Karosserieform auf, die in dem Ausführungsbeispiel für alle Betriebsmodi des Fahrzeugs 1 in gleicher Weise dargestellt wird. Zusätzlich dazu wird die Hintergrunddarstellung 20b mittels weiterer Elemente der Darstellung in Abhängigkeit von dem jeweils ausgewählten Betriebsmodus gebildet. Details hierzu werden unten erläutert.

Bei dem Ausführungsbeispiel ist ferner vorgesehen, dass durch die Umgebungsdatenerfassungseinheit 7 Daten über die Umgebung des Fahrzeugs 1 erfasst werden. Insbesondere ist eine Kamera vorgesehen, durch die Informationen über weitere Verkehrsteilnehmer, den Fahrbahnverlauf, die Beschaffenheit der Fahrbahn, klimatische Verhältnisse und/oder Lichtverhältnisse erfasst werden. Die Hintergrunddarstellung 20b wird in dem Ausführungsbeispiel auch anhand dieser Umgebungsdaten gebildet. Insbesondere spiegelt die Hintergrunddarstellung 20b die tatsächlichen Verhältnisse der Umgebung des Fahrzeugs 1 wider, wobei eine Abstraktion, insbesondere zur Vereinfachung der dargestellten Szene, erfolgen kann.

In Abhängigkeit von den Umgebungsdaten wird ferner eine Betriebsmodusempfehlung erzeugt. Diese umfasst Informationen zu einem Betriebsmodus, der als besonders geeignet für die Verhältnisse in der Umgebung des Fahrzeugs 1 angesehen wird. Die Hintergrunddarstellung 20b wird in dem Beispiel in Abhängigkeit von der Betriebsmodusempfehlung gebildet. Insbesondere wird der empfohlene Betriebsmodus zu Beginn der Auswahlmöglichkeit als ausgewählt dargestellt, wobei die entsprechende ausgewählte Schaltfläche 21a hervorgehoben dargestellt wird. Ferner kann in einem weiteren Ausführungsbeispiel die Betriebsmodusempfehlung automatisch übernommen werden.

Nach der Auswahl eines Betriebsmodus durch Betätigen der jeweils zugeordneten Schaltfläche 21, 21a wird durch die Steuereinheit 6 ein Steuersignal erzeugt und an die Steuerungseinrichtung 5, in dem dargestellten Fall eine Fahrprofilsteuerung 5, übertragen. Diese wendet die entsprechenden Einstellungen für weitere Einrichtungen des Fahrzeugs 1 an. Dabei kann in einem weiteren Ausführungsbeispiel ein Bestätigungsschritt vorgesehen sein, beispielsweise, indem der Nutzer seine Auswahl bestätigen muss, bevor der Betriebsmodus gewechselt wird.

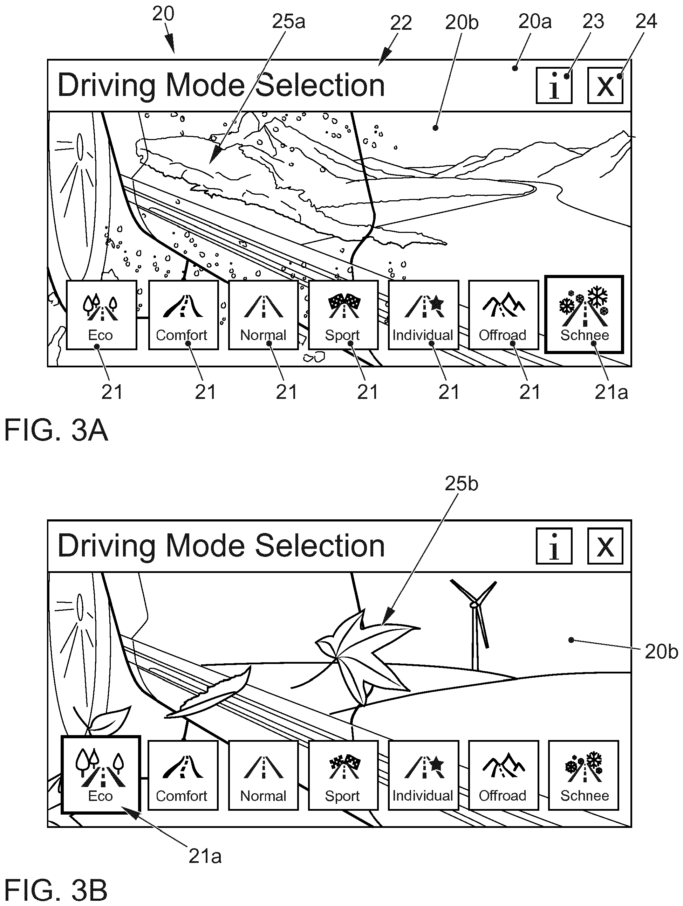

Mit Bezug zu den Figuren 3A bis 3G werden weitere Ausführungsbeispiele von mittels des erfindungsgemäßen Verfahrens erzeugten Bedienoberflächen erläutert. Dabei wird weiterhin von dem oben beschriebenen erfindungsgemäßen System ausgegangen.

In den Ausführungsbeispielen sind jeweils sieben Fahrprofile vorgesehen, die jeweils einem Betriebsmodus entsprechen. Diese werden als "Eco", "Comfort", "Normal", "Sport", "Individual", "Offroad" und "Schnee" bezeichnet. Jedem der sieben Betriebsmodi ist eine der Schaltflächen 21, 21a zugeordnet. Bei dem in Figur 3A dargestellten Beispiel ist das Fahrprofil "Schnee" ausgewählt und die entsprechende Schaltfläche 21a ist hervorgehoben dargestellt.

Die Hintergrunddarstellung 20b umfasst eine Darstellung eines seitlichen Fahrzeugausschnitts bei einer Fahrt unter winterlichen Bedingungen. Dies wird durch an der Karosserie abgelagerten Schnee 25a sowie durch aufspritzende Wassertropfen im unteren Bereich der Hintergrunddarstellung 20b dargestellt. Dabei wird insbesondere ein dynamischer Effekt dargestellt, beispielsweise bewegen sich die dargestellten Wassertropfen. Es wird ferner eine Überlagerung mit der Fahrzeugoberfläche durch eine Darstellung einer virtuellen Umgebung erzeugt, wobei die virtuelle Umgebung wie bei einer Reflexion auf der Fahrzeugoberfläche abgebildet wird. In dem dargestellten Fall wird hierbei eine Straße mit Schnee in einer verschneiten Berglandschaft dargestellt.

Bei dem in Figur 3B dargestellten Fall ist das Fahrprofil "Eco" ausgewählt. Die entsprechende Schaltfläche 21a wird hervorgehoben dargestellt. Die Hintergrunddarstellung 20b umfasst die gleiche Karosserieform wie bereits oben mit Bezug zu Figur 3A dargestellt. Ferner wird durch eine besondere virtuelle Umgebung ein Bezug zu dem Fahrprofil hergestellt, welches ein besonders effizientes und ökologisch verträgliches Fahren erlauben soll. Die als auf der Oberfläche der Karosserieform gespiegelte virtuelle Umgebung dargestellte Landschaft umfasst grüne Hügel und ein Windrad. Ferner umfasst die Hintergrunddarstellung 20b ein Blatt 25b, das im Bereich der Karosserie durch die Luft fliegt.

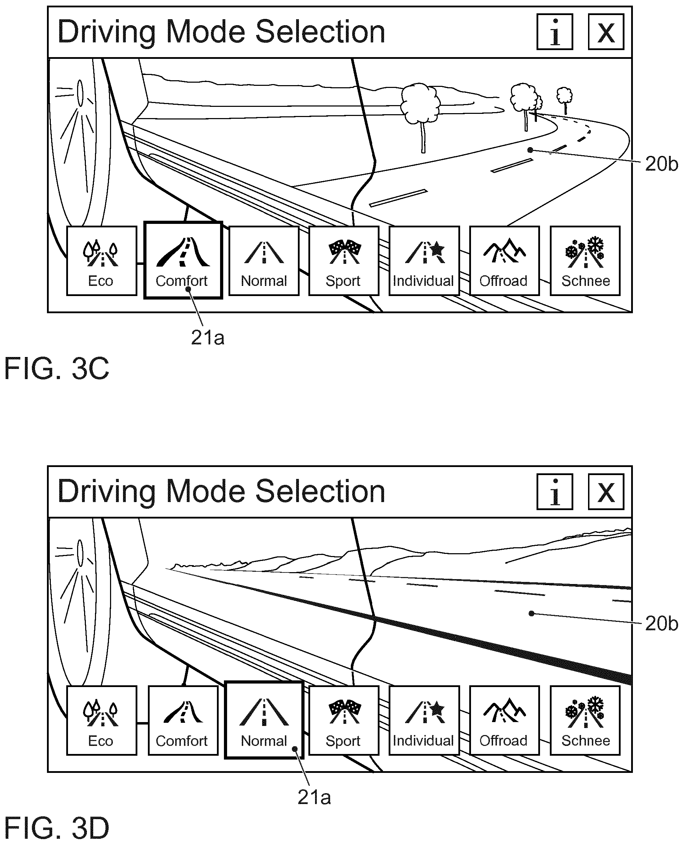

Bei dem in Figur 3C dargestellten Fall ist das Fahrprofil "Comfort" ausgewählt und die entsprechende Schaltfläche 21a hervorgehoben dargestellt. Die virtuelle Umgebung, die bei der Hintergrunddarstellung 20b als in der Karosserieform gespiegelt dargestellt wird, umfasst eine leicht kurvig verlaufende Fahrbahn in einer grünen Landschaft.

Bei dem in Figur 3D dargestellten Fall ist das Fahrprofil "Normal" ausgewählt und die entsprechende Schaltfläche 21a hervorgehoben dargestellt. Die virtuelle Umgebung der Hintergrunddarstellung 20b umfasst hier eine geradeaus verlaufende Straße in einer weitgehend neutral dargestellten Landschaft.

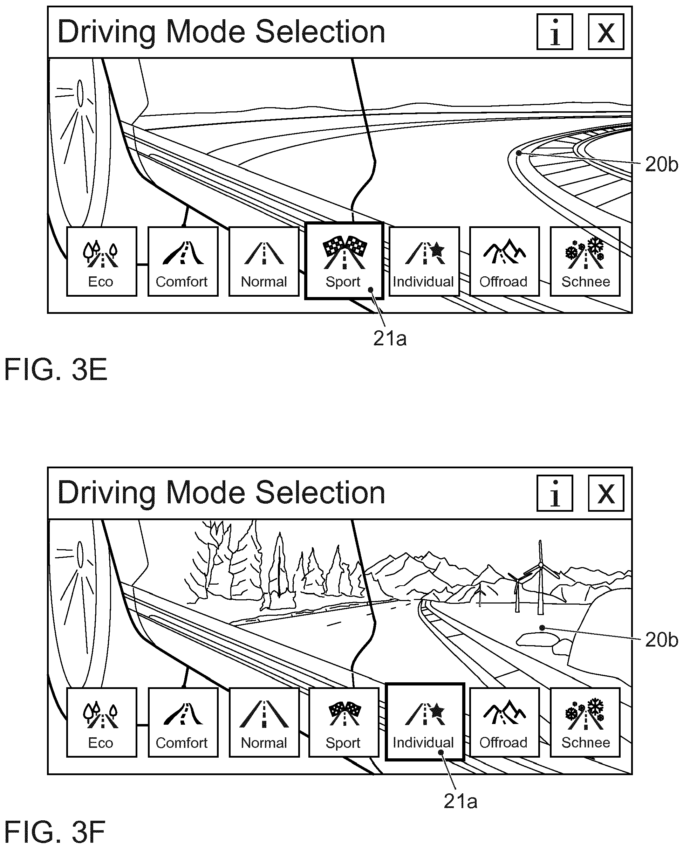

Bei dem in Figur 3E dargestellten Fall ist das Fahrprofil "Sport" ausgewählt und die entsprechende Schaltfläche 21a wird hervorgehoben dargestellt. Die Hintergrunddarstellung 20b umfasst wieder die gleiche Karosserieform wie in den oben beschriebenen Fällen, die auf der Fahrzeugoberfläche gespiegelte virtuelle Umgebung umfasst in diesem Fall einen Ausschnitt einer gekrümmt verlaufenden Rennstrecke mit charakteristischen Markierungen am Fahrbahnrand.

Bei dem in Figur 3F dargestellten Fall ist das Fahrprofil "individual" ausgewählt und die entsprechende Schaltfläche 21a hervorgehoben dargestellt. Die Hintergrunddarstellung 20b umfasst wieder die gleiche Karosserieform wie oben dargestellt, die auf der Oberfläche der Karosserieform reflektiert dargestellte virtuelle Umgebung umfasst eine Mischung verschiedener Elemente, insbesondere eine teilweise verschneite Landschaft mit Bergen sowie grünen Wiesen und Hügeln, Windrädern, eine Fahrbahn mit teilweise glatten und teilweise unebenen Fahrbahnbelag sowie eine für Rennstrecken typische Fahrbahnbegrenzung.

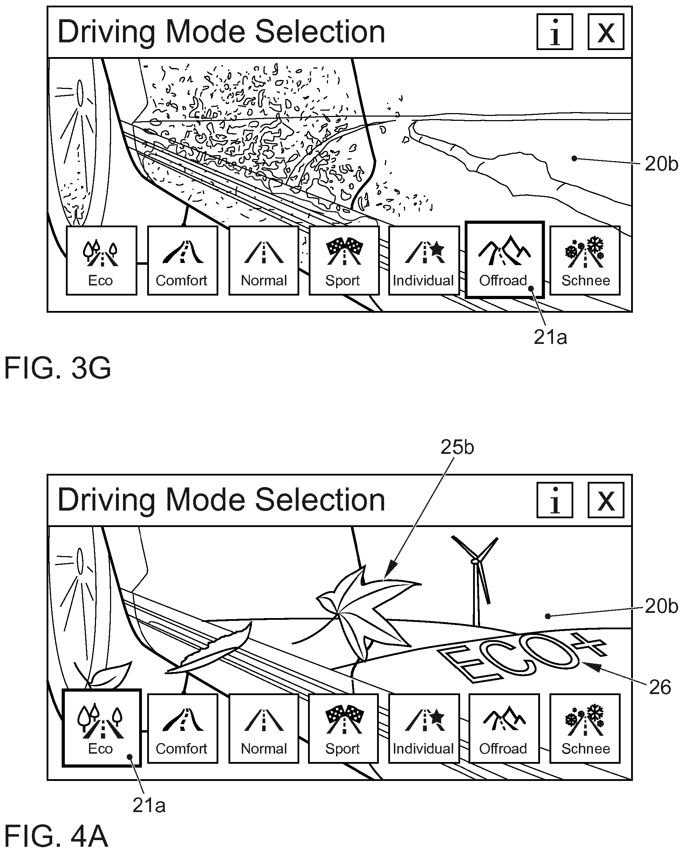

Bei dem in Figur 3G dargestellten Fall ist das Fahrprofil "Offroad" ausgewählt und die entsprechende Schaltfläche 21a wird hervorgehoben dargestellt. Die Hintergrunddarstellung 20b umfasst wiederum die gleiche Karosserieform wie oben bereits dargestellt, die virtuelle Umgebung, die als auf der Oberfläche der Karosserieform reflektiert dargestellt wird, umfasst jedoch eine nicht befestigte Fahrbahn in einer felsigen Landschaft. Ferner sind auf der Oberfläche der Karosserie Matschspritzer sowie aufgewirbelte Schmutzpartikel dargestellt.

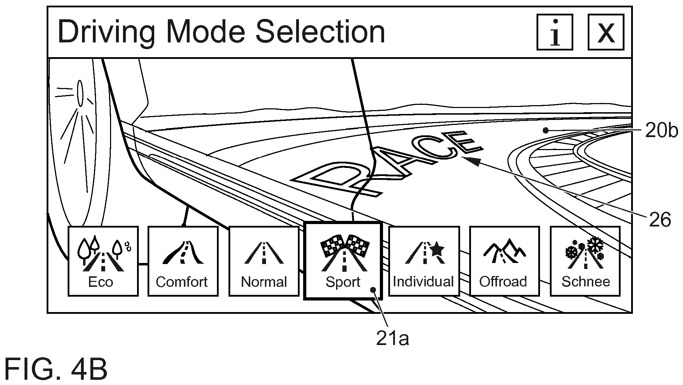

Mit Bezug zu den Figuren 4A und 4B werden Ausführungsbeispiele von mittels des erfindungsgemäßen Verfahrens erzeugten Bedienoberflächen mit Schriftzügen erläutert. Dabei wird von dem oben erläuterten erfindungsgemäßen System und Verfahren sowie von den in den Figuren 3A bis 3G dargestellten Bedienoberflächen ausgegangen.

Bei dem in Figur 4A dargestellten Fall ist das Fahrprofil "Eco" ausgewählt und die entsprechende Schaltfläche 21a hervorgehoben dargestellt. Die Hintergrunddarstellung 20b umfasst, ähnlich wie bei dem oben mit Bezug zu Figur 3B erläuterten Fall, die gleiche Karosserieform wie bei den oben beschriebenen Fällen sowie eine virtuelle Umgebung, die als Reflexion auf der Oberfläche der Karosserieform dargestellt wird. Die virtuelle Umgebung umfasst ein Windrad sowie grüne Hügel. Ferner ist als weiteres grafisches Objekt ein Blatt 25b dargestellt, welches im Bereich der Karosserie durch die Luft fliegt. Die Hintergrunddarstellung 20b umfasst ferner einen Schriftzug 26, der hier lautet "ECO+". Der Schriftzug 26 ist so dargestellt, dass er sich auf der Oberfläche eines der grünen Hügel der virtuellen Umgebung zu befinden scheint.

In analoger Weise umfasst bei dem in Figur 4B dargestellten Fall die Hintergrunddarstellung 20b den Schriftzug 26 "RACE", wobei dieser Schriftzug so dargestellt wird, dass er sich auf einer Fahrbahn einer Rennstrecke zu befinden scheint und dem Verlauf einer Kurve folgt. Die Hintergrunddarstellung 20b, insbesondere die Karosserieform und virtuelle Umgebung, entspricht ansonsten im Wesentlichen der in Figur 3E dargestellten grafischen Bedienoberfläche 20.

In weiteren Ausführungsbeispielen werden andere Darstellungsformen für die Hintergrunddarstellung 20b gewählt. Insbesondere kann die dargestellte Karosserieform in größerem oder geringerem Maße abstrahiert sein. Dabei kann insbesondere eine spezifische Karosserieform des Fahrzeugs 1 oder eine typische Karosserieform für ein Fahrzeug einer ähnlichen Klasse dargestellt werden. Die virtuelle Umgebung, die als auf der Oberfläche der Karosserieform reflektiert dargestellt wird, kann ebenfalls in verschiedenen Weisen gebildet werden, insbesondere abhängig von den verfügbaren Betriebsmodi des Fahrzeugs 1. Ferner können alternativ oder zusätzlich weitere grafische Objekte 25 dargestellt werden, die signalisieren, dass das dargestellte Fahrzeug sich in der virtuellen Umgebung befindet. Insbesondere wird dabei beachtet, dass die dargestellte virtuelle Umgebung in Bezug zu dem jeweils ausgewählten Betriebsmodus steht.

### Bezugszeichenliste

- 1: Fahrzeug
- 2: Recheneinheit
- 3: Ausgabeeinheit; Display
- 4: Erfassungseinheit; berührungsempfindliche Oberfläche
- 5: Steuerungseinrichtung; Fahrprofilsteuerung
- 6: Steuereinheit
- 7: Umgebungsdatenerfassungseinheit
- 8: Touchscreen
- 20: Grafische Bedienoberfläche
- 20a: Informationsleiste
- 20b: Hintergrunddarstellung
- 21: Schaltfläche (nicht ausgewählt)
- 21a: Schaltfläche (ausgewählt)
- 22: Informationstext
- 23: Schaltfläche "Information"
- 24: Schaltfläche "Schließen"
- 25: Grafisches Objekt
- 25a: Schnee
- 25b: Blatt
- 26: Schriftzug

## Patentansprüche

1. Verfahren zum Auswählen eines Betriebsmodus für ein Fahrzeug (1), welches zumindest zwei Betriebsmodi aufweist, bei dem
Grafikdaten einer grafischen Bedienoberfläche (20) erzeugt und ausgegeben werden, wobei die grafische Bedienoberfläche (20) eine Hintergrunddarstellung (20b) und zumindest zwei auswählbare Schaltflächen (21, 21a) umfasst, wobei die Schaltflächen (21, 21a) jeweils einem Betriebsmodus des Fahrzeugs (1) zugeordnet sind;
eine Auswahl einer Schaltfläche (21a) erfasst wird; und
in Abhängigkeit von dem Betriebsmodus, welcher der ausgewählten Schaltfläche (21a) zugeordnet ist, ein Steuersignal erzeugt und an eine Steuerungseinrichtung (5) des Fahrzeugs (1) übertragen wird; **da**
**durch gekennzeichnet, dass**
die Hintergrunddarstellung (20b) eine Darstellung einer Fahrzeugoberfläche umfasst, wobei die dargestellte Fahrzeugoberfläche in Abhängigkeit von dem zum aktuellen Zeitpunkt ausgewählten Betriebsmodus gebildet wird; sowie
Umgebungsdaten erfasst werden und die Hintergrunddarstellung (10b) ferner in Abhängigkeit von den Umgebungsdaten gebildet wird; wobei
die Darstellung der Fahrzeugoberfläche eine Karosserieform und eine Darstellung einer virtuellen Umgebung aufweist; wobei
die Darstellung der virtuellen Umgebung in Abhängigkeit von dem zum aktuellen Zeitpunkt ausgewählten Betriebsmodus gebildet wird und die Karosserieform überlagernd dargestellt wird; wobei
die virtuelle Umgebung eine Fahrbahn, Elemente einer Verkehrsinfrastruktur und/oder landschaftliche Objekte umfasst; wobei
die virtuelle Umgebung als eine abstrahierte Darstellung einer tatsächlichen Umgebung des Fahrzeugs (1) gebildet wird.

2. Verfahren gemäß Anspruch 1,
**dadurch gekennzeichnet, dass**
die Karosserieform der Hintergrunddarstellung (20b) für alle Betriebsmodi gleich gebildet wird.

3. Verfahren gemäß Anspruch 1 oder 2,
**dadurch gekennzeichnet, dass**
die Karosserieform dreidimensional dargestellt wird.

4. Verfahren gemäß einem der vorhergehenden Ansprüche,
**dadurch gekennzeichnet, dass**
die erfassten Umgebungsdaten Wetterdaten umfassen.

5. Verfahren gemäß einem der vorhergehenden Ansprüche,
**dadurch gekennzeichnet, dass**
anhand der erfassten Umgebungsdaten eine Betriebsmodusempfehlung erzeugt wird, wobei der Betriebsmodusempfehlung ein Betriebsmodus des Fahrzeugs (1) zugeordnet ist.

6. Verfahren gemäß Anspruch 5,
**dadurch gekennzeichnet, dass**
die Hintergrunddarstellung (20b) in Abhängigkeit von der Betriebsmodusempfehlung gebildet wird.

7. Verfahren gemäß einem der vorhergehenden Ansprüche,
**dadurch gekennzeichnet, dass**
die Hintergrunddarstellung (20b) ferner einen Schriftzug (26) umfasst.

8. Verfahren gemäß einem der vorhergehenden Ansprüche,
**dadurch gekennzeichnet, dass**
die Hintergrunddarstellung (20b) ferner weitere Grafikelemente (25, 25a, 25b) umfasst, wobei die weiteren Grafikelemente (25, 25a, 25b) in Abhängigkeit von dem zum aktuellen Zeitpunkt ausgewählten Betriebsmodus gebildet werden.

9. Verfahren gemäß einem der vorhergehenden Ansprüche,
**dadurch gekennzeichnet, dass**
die Hintergrunddarstellung (20b) dynamisch erzeugt wird.

10. Verfahren gemäß einem der vorhergehenden Ansprüche,
**dadurch gekennzeichnet, dass**
die zum aktuellen Zeitpunkt ausgewählte Schaltfläche (21a) der grafischen Bedienoberfläche (20b) hervorgehoben wird.

11. Verfahren gemäß einem der vorhergehenden Ansprüche,
**dadurch gekennzeichnet, dass**
anhand des an die Steuerungseinrichtung (5) des Fahrzeugs (1) übertragenen Steuersignals eine Einstellungen eines Fahrwerks, einer Höchstgeschwindigkeit, einer Fahrzeuglenkung und/oder einer Getriebesteuerung vorgenommen werden.

12. System zum Auswählen eines Betriebsmodus für ein Fahrzeug (1), welches zumindest zwei Betriebsmodi aufweist, mit
einer Recheneinheit (2), durch die Grafikdaten einer grafischen Bedienoberfläche (20) erzeugbar sind; und
einer Ausgabeeinheit (3), durch welche die Grafikdaten ausgebbar sind; wobei
die grafische Bedienoberfläche (20) eine Hintergrunddarstellung (20b) und zumindest zwei auswählbare Schaltflächen (21, 21a) umfasst, wobei die Schaltflächen (21, 21a) jeweils einem Betriebsmodus des Fahrzeugs (1) zugeordnet sind; sowie
einer Erfassungseinheit (4) durch die eine Auswahl einer Schaltfläche (21a) erfassbar ist; wobei
in Abhängigkeit von dem Betriebsmodus, welcher der ausgewählten Schaltfläche (21a) zugeordnet ist, ein Steuersignal erzeugbar und an eine Steuerungseinrichtung (5) des Fahrzeugs (1) übertragbar ist;
**dadurch gekennzeichnet, dass**
die Hintergrunddarstellung (20b) eine Darstellung einer Fahrzeugoberfläche umfasst, wobei die Recheneinheit (2) dazu eingerichtet ist, die dargestellte Fahrzeugoberfläche in Abhängigkeit von dem zum aktuellen Zeitpunkt ausgewählten Betriebsmodus zu bilden; sowie
Umgebungsdaten erfassbar sind und die Recheneinheit (2) dazu eingerichtet ist, die Hintergrunddarstellung (10b) ferner in Abhängigkeit von den Umgebungsdaten zu bilden; wobei
die Darstellung der Fahrzeugoberfläche eine Karosserieform und eine Darstellung einer virtuellen Umgebung aufweist; wobei
die Recheneinheit (2) dazu eingerichtet ist, die Darstellung der virtuellen Umgebung in Abhängigkeit von dem zum aktuellen Zeitpunkt ausgewählten Betriebsmodus zu bilden und die Karosserieform überlagernd darzustellen; wobei
die virtuelle Umgebung eine Fahrbahn, Elemente einer Verkehrsinfrastruktur und/oder landschaftliche Objekte umfasst; wobei
die Recheneinheit (2) dazu eingerichtet ist, die virtuelle Umgebung als eine abstrahierte Darstellung einer tatsächlichen Umgebung des Fahrzeugs (1) zu bilden.

## Claims

1. Method for selecting an operating mode for a vehicle (1) which has at least two operating modes, in which graphics data of a graphics operator interface (20) is generated and output, wherein the graphics operator interface (20) comprises a background representation (20b) and at least two selectable button areas (21, 21a), wherein the button areas (21, 21a) are each assigned to an operating mode of the vehicle (1) ;
a selection of a button area (21a) is sensed; and
a control signal is generated in accordance with the operating mode which is assigned to the selected button area (21a), and said control signal is transmitted to a control device (5) of the vehicle (1);
**characterized in that**
the background representation (20b) comprises a representation of a vehicle surface, wherein the represented vehicle surface is formed in accordance with the operating mode which is selected at the current point in time; and
surroundings data are acquired and the background representation (10b) is additionally formed in accordance with the surroundings data; wherein
the representation of the vehicle surface has a bodywork shape and a representation of virtual surroundings; wherein
the representation of the virtual surroundings is formed in accordance with the operating mode which is selected at the current point in time, and the shape of the bodywork is represented in a superimposed fashion; wherein
the virtual surroundings comprise a roadway, elements of traffic infrastructure and/or geographic features; wherein
the virtual surroundings are formed as an abstract representation of the actual surroundings of the vehicle (1).

2. Method according to Claim 1,
**characterized in that**
the bodywork shape of the background representation (20b) is formed in the same way for all the operating modes.

3. Method according to Claim 1 or 2,
**characterized in that**
the bodywork shape is represented three dimensionally.

4. Method according to one of the preceding claims,
**characterized in that**
the acquired surroundings data comprises weather data.

5. Method according to one of the preceding claims,
**characterized in that**
an operating mode recommendation is generated on the basis of the acquired surroundings data, wherein the operating mode recommendation is assigned an operating mode of the vehicle (1).

6. Method according to Claim 5,
**characterized in that**
the background representation (20b) is formed in accordance with the operating mode recommendation.

7. Method according to one of the preceding claims,
**characterized in that**
the background representation (20b) also comprises lettering (26).

8. Method according to one of the preceding claims,
**characterized in that**
the background representation (20b) also comprises further graphics elements (25, 25a, 25b), wherein the further graphics elements (25, 25a, 25b) are formed in accordance with the operating mode selected at the current point in time.

9. Method according to one of the preceding claims,
**characterized in that**
the background representation (20b) is generated dynamically.

10. Method according to one of the preceding claims,
**characterized in that**
the button area (21a), selected at the current point in time, of the graphic operator interface (20b) is highlighted.

11. Method according to one of the preceding claims,
**characterized in that**
settings of a chassis, of a maximum speed, of a vehicle steering system and/or of a transmission controller are made on the basis of the control signal transmitted to the control apparatus (5) of the vehicle (1).

12. System for selecting an operating mode for a vehicle (1) which has at least two operating modes, having a computing unit (2) by means of which graphics data of a graphics operator interface (20) can be generated; and
an output unit (3) by means of which the graphics data can be output; wherein
the graphics operator interface (20) comprises a background representation (20b) and at least two selectable button areas (21, 21a), wherein the button areas (21, 21a) are each assigned to an operating mode of the vehicle (1);
and
a sensing unit (4) by means of which a selection of a button area (21a) can be sensed; wherein
a signal can be generated in accordance with the operating mode which is assigned to the selected button area (21a), and said control signal can be transmitted to a control apparatus (5) of the vehicle (1);
**characterized in that**
the background representation (20b) comprises a representation of the vehicle surface, wherein the computing unit (2) is configured to form the represented vehicle surface in accordance with the operating mode which is selected at the current point in time; and
surroundings data can be acquired and the computed unit (2) is configured to form the background representation (10b) also in accordance with the surroundings data; wherein
the representation of the vehicle surface has a bodywork shape and a representation of virtual surroundings, wherein
the computing unit (2) is configured to form a representation of the virtual surroundings in accordance with the operating mode which is selected at the current point in time, and to represent the bodywork shape in a superimposed fashion; wherein the virtual surroundings comprise a roadway, elements of traffic infrastructure and/or geographic features; wherein
the computing unit (2) is configured to form the virtual surroundings as an abstract representation of the actual surroundings of the vehicle (1).

## Revendications

1. Procédé de sélection d'un mode de fonctionnement d'un véhicule (1) comportant au moins deux modes de fonctionnement, procédé dans lequel
des données graphiques d'une interface utilisateur graphique (20) sont générées et délivrées en sortie, l'interface utilisateur graphique (20) comprenant une représentation d'arrière-plan (20b) et au moins deux boutons sélectionnables (21, 21a), les boutons (21, 21a) étant chacun associés à un mode de fonctionnement du véhicule (1) ;
une sélection d'un bouton (21a) est détectée ; et en fonction du mode de fonctionnement qui est associé au bouton de commande sélectionné (21a), un signal de commande est généré et transmis à un dispositif de commande (5) du véhicule (1) ; **car**
**actérisé en ce que**
la représentation d'arrière-plan (20b) comprend une représentation d'une surface de véhicule, la surface de véhicule représentée étant formée en fonction du mode de fonctionnement sélectionné à l'instant actuel ; et
des données d'environnement sont enregistrées et la représentation d'arrière-plan (10b) est également formée en fonction des données d'environnement ;
la représentation de la surface de véhicule a une forme de carrosserie et comporte une représentation d'un environnement virtuel ;
la représentation de l'environnement virtuel est formée en fonction du mode de fonctionnement sélectionné à l'instant actuel et la forme de carrosserie est représentée en superposition ;
l'environnement virtuel comprend une chaussée, des éléments d'une infrastructure de circulation et/ou des objets paysagers ;
l'environnement virtuel est formé comme une représentation abstraite d'un environnement réel du véhicule (1).

2. Procédé selon la revendication 1,
**caractérisé en ce que**
la forme de carrosserie de la représentation d'arrière-plan (20b) est la même pour tous les modes de fonctionnement.

3. Procédé selon la revendication 1 ou 2,
**caractérisé en ce que**
la forme de carrosserie est représentée en trois dimensions.

4. Procédé selon l'une des revendications précédentes,
**caractérisé en ce que**
les données d'environnement acquises comprennent des données météorologiques.

5. Procédé selon l'une des revendications précédentes,
**caractérisé en ce que**
une recommandation de mode de fonctionnement est générée sur la base des données d'environnement acquises, la recommandation de mode de fonctionnement étant associée à un mode de fonctionnement du véhicule (1) .

6. Procédé selon la revendication 5,
**caractérisé en ce que**
la représentation d'arrière-plan (20b) est formée en fonction de la recommandation de mode de fonctionnement.

7. Procédé selon l'une des revendications précédentes,
**caractérisé en ce que**
la représentation d'arrière-plan (20b) comprend en outre des lettres (26).

8. Procédé selon l'une des revendications précédentes,
**caractérisé en ce que**
la représentation d'arrière-plan (20b) comprend en outre d'autres éléments graphiques (25, 25a, 25b), les autres éléments graphiques (25, 25a, 25b) étant formés en fonction du mode de fonctionnement sélectionné à l'instant actuel.

9. Procédé selon l'une des revendications précédentes,
**caractérisé en ce que**
la représentation d'arrière-plan (20b) est générée de manière dynamique.

10. Procédé selon l'une des revendications précédentes,
**caractérisé en ce que**
le bouton (21a), sélectionné à l'instant actuel, de l'interface utilisateur graphique (20b) est mis en évidence.

11. Procédé selon l'une des revendications précédentes,
**caractérisé en ce que**
des réglages d'un mécanisme de roulement, d'une vitesse maximale, d'une direction de véhicule et/ou d'une commande de transmission peuvent être effectués sur la base du signal de commande transmis au dispositif de commande (5) du véhicule (1).

12. Système de sélection d'un mode de fonctionnement d'un véhicule (1) comportant au moins deux modes de fonctionnement, le système comprenant
une unité de calcul (2) permettant de générer des données graphiques d'une interface utilisateur graphique (20) ; et
une unité de sortie (3) permettant de délivrer en sortie les données graphiques ;
l'interface utilisateur graphique (20) comprenant une représentation d'arrière-plan (20b) et au moins deux boutons sélectionnables (21, 21a), les boutons (21, 21a) étant chacun associés à un mode de fonctionnement du véhicule (1) ; et
une unité de détection (4) permettant de détecter une sélection d'un bouton (21a) ;
un signal de commande pouvant être généré et transmis à un dispositif de commande (5) du véhicule (1) en fonction du mode de fonctionnement qui est associé au bouton sélectionné (21a) ;
**caractérisé en ce que**
la représentation d'arrière-plan (20b) comprend une représentation d'une surface de véhicule, l'unité de calcul (2) étant conçue pour former la surface de véhicule représentée en fonction du mode de fonctionnement sélectionné à l'instant actuel ; et
des données d'environnement peuvent être acquises et l'unité de calcul (2) est conçue pour former en outre la représentation d'arrière-plan (10b) en fonction des données d'environnement ;
la représentation de la surface de véhicule a une forme de carrosserie et comporte une représentation d'un environnement virtuel ;
l'unité de calcul (2) est conçue pour former la représentation de l'environnement virtuel en fonction du mode de fonctionnement sélectionné à l'instant actuel et pour représenter en superposition la forme de carrosserie ;
l'environnement virtuel comprenant une chaussée, des éléments d'une infrastructure de circulation et/ou des objets paysagers ;
l'unité de calcul (2) étant conçue pour former l'environnement virtuel sous la forme d'une représentation abstraite d'un environnement réel du véhicule (1).
